# EUROPÄISCHE PATENTSCHRIFT

(11) **EP 0 503 580 B1**
(45) Veröffentlichungstag und Bekanntmachung des Hinweises auf die Patenterteilung: **19.07.1995**
(21) Anmeldenummer: 92104145.5
(22) Anmeldetag: 11.03.1992
(51) Int. Cl.: F01N 7/14, F01N 7/08, F16L 59/18

(54) **Luftspaltisoliertes Vorrohr**
Exhaust pipe with air gap insulation
Conduit d'échappement isolé par une couche d'air

(30) Priorität: 12.03.1991 DE 9102926 U
(43) Veröffentlichungstag der Anmeldung: 16.09.1992
(73) Patentinhaber: LEISTRITZ AG & CO. Abgastechnik, D-90765 Fürth (DE)
(72) Erfinder: Ermer, Hermann, D-90480 Nürnberg (DE); Sagitzki, Manfred, D-90409 Nürnberg (DE); Stoepler, Walter, Dr., D-91074 Herzogenaurach (DE); Strüber, Günter, D-90411 Nürnberg (DE); Unbehaun, Martin, D-90408 Nürnberg (DE); Zapf, Michael, D-90443 Nürnberg (DE)
(74) Vertreter: Tergau, Enno, Dipl.-Ing.

(56) Entgegenhaltungen:
- DE-A- 2 015 843
- DE-A- 2 452 556
- DE-U- 8 912 161
- FR-A- 1 394 743
- GB-A- 2 075 658
- US-A- 4 185 463
- US-A- 4 250 927
- US-A- 4 607 665

## Beschreibung

Die Erfindung betrifft ein luftspaltisoliertes Vorrohr als Abgasstrang zwischen Motor und Katalysator eines Automobils mit den im Oberbegriff des Anspruches 1 aufgeführten Merkmalen.

Bei einem aus DE-A-24 52 556, die den nächstkommenden Stand der Technik bildet, bekannten Vorrohr dieser Art ist das Innenrohr aus Gründen der Massereduzierung vergleichsweise dünnwandig ausgeführt, um dem mit ihm in unmittelbarem Kontakt stehenden Abgas möglichst wenig Wärme zu entziehen. Es besteht aus hochwertigem Werkstoff, insbesondere aus Stahl. Dem das Innenrohr unter Belassung des wärmeisolierenden Luft-Ringspaltes umgebenden Mantelrohr obliegt neben der Wärmeisolationsfunktion die Trägerfunktion für das Innenrohr. Am Mantelrohr ist beispielsweise der Verbindungsflansch zum Abgasstutzen des Motors befestigt, insbesondere angeschweißt. Desgleichen bildet das Mantelrohr das Einsteckende des Vorrohres in das Katalysatorgehäuse. Das Mantelrohr besteht aus einfachem, kostengünstigem Werkstoff, insbesondere Stahl, und ist aus Stabilitätsgründen vergleichsweise dickwandig ausgeführt.

Bei dem bekannten Vorrohr ist das Innenrohr am motorseitigen Ende mit dem Mantelrohr fest verbunden, während es am anderen, katalysatorseitigen Ende mit einem Schiebesitz im Mantelrohr geführt ist. Dazu sind über den Umfang verteilt angeordnete, zwischen Mantelrohr und Innenrohr wirksame Federelemente vorgesehen, die mit dem Mantelrohr fest verbunden, nämlich verschweißt oder verschraubt sind und den Umfang des Innenrohres beaufschlagen. Damit ist in federnd abgestützter Form eine gewisse Relativbewegung des Innenrohres gegenüber dem Mantelrohr unter geringfügiger Verformung der Federelemente möglich. Die feste Fixierung des Federelements an dem Mantelrohr beeinträchtigt jedoch die freie Beweglichkeit. Ist die Fixierung durch eine Schweißung erfolgt, so kann sie nachteilige Auswirkungen auf die Federcharakteristik des Distanzelementes haben.

Die durch diesen Schiebesitz ermöglichte Relativbeweglichkeit zwischen Innenrohr und Mantelrohr in Axialrichtung des Vorrohres ist erforderlich, um beim Motorbetrieb einen Ausgleich für die unterschiedlichen Wärmeausdehnungen von Innenrohr und Mantelrohr zu ermöglichen. Diese unterschiedlichen Wärmeausdehnungen sind unvermeidlich wegen des unterschiedlichen Temperaturniveaus von Innenrohr und Mantelrohr.

Der vom Vorrohr gebildete Abgasstrang zwischen Motor und Katalysator verläuft nicht geradlinig, sondern auf den Gegebenheiten der Automobilkarosserie angepaßten, unregelmäßig gewundenen Wegen. Dadurch treten zwischen Innen- und Mantelrohr im Bereich des Schiebesitzes neben Axialkräften starke, rechnerisch schwer vorhersehbare Querkräfte auf, die ein von unangenehmer Geräuschentwicklung begleitetes Festsetzen oder Klemmen des Schiebesitzes bewirken können.

Der Erfindung liegt die Aufgabe zugrunde, das Innenrohr so innerhalb des Mantelrohres anzuordnen und zu führen, daß es sich aufgrund seiner Wärmeausdehnungen möglichst ungehindert relativ zum Mantelrohr bewegen kann. Diese Aufgabe wird entsprechend dem Kennzeichen des Anspruches 1 durch im Schiebesitzbereich angeordnete Distanzelemente gelöst, die neben der Längsverschiebbarkeit eine zusätzliche Winkelbeweglichkeit zwischen Innen- und Mantelrohr ermöglichen. Diese Distanzelemente verleihen somit dem Schiebesitz eine mit der Funktion eines Pendelkugellagers vergleichbare Wirksamkeit, indem sich nämlich das Innenrohr gegenüber dem Mantelrohr nicht nur axial verschieben, sondern auch um den Lagermittelpunkt schwenkend einstellen kann. Dadurch wird der Schiebesitz auch unempfindlich gegen Fluchtfehler zwischen Innen- und Mantelrohr sowie gegen Biegebewegungen des Innenrohrs relativ zum Mantelrohr. Der Ringkörper stabilisiert die Distanzelemente. Seine rinnenartige Konkavseite dient zu deren axial sicherer Festlegung ohne deren körperliche oder stoffliche Verbindung mit einem Rohr.

Das Merkmal des Anspruches 2 begünstigt eine sichere Festlegung des Ringkörpers an der Wand des ihm zugeordneten Rohres.

Durch das Merkmal des Anspruches 3 kann der Ringkörper den aus Wärmespannungen resultierenden Durchmesserveränderungen des ihm zugeordneten Rohres besser folgen.

Gegenstand des Anspruches 6 ist insbesondere eine bevorzugte Form eines Federringes. Der Vorzug liegt darin, daß der Federring mit seinen nach Art von Federlamellen wirksamen Brückenstegen in einem nahezu punktförmigen Kontakt mit dem von ihm distanzierten Rohr steht.

Ein vergleichbarer Punkt- oder Linienkontakt zwischen dem Federring und der Rinnenoberfläche des Ringkörpers wird durch das Kennzeichen des Anspruches 10 bewirkt.

Die Ansprüche 15 und 16 sind auf eine modifizierte Ausführungsform des Distanzelementes gerichtet, welches hier durch einen Drahtpreßring oder durch aus Stahlwolle bestehenden Pufferkörpern gebildet ist.

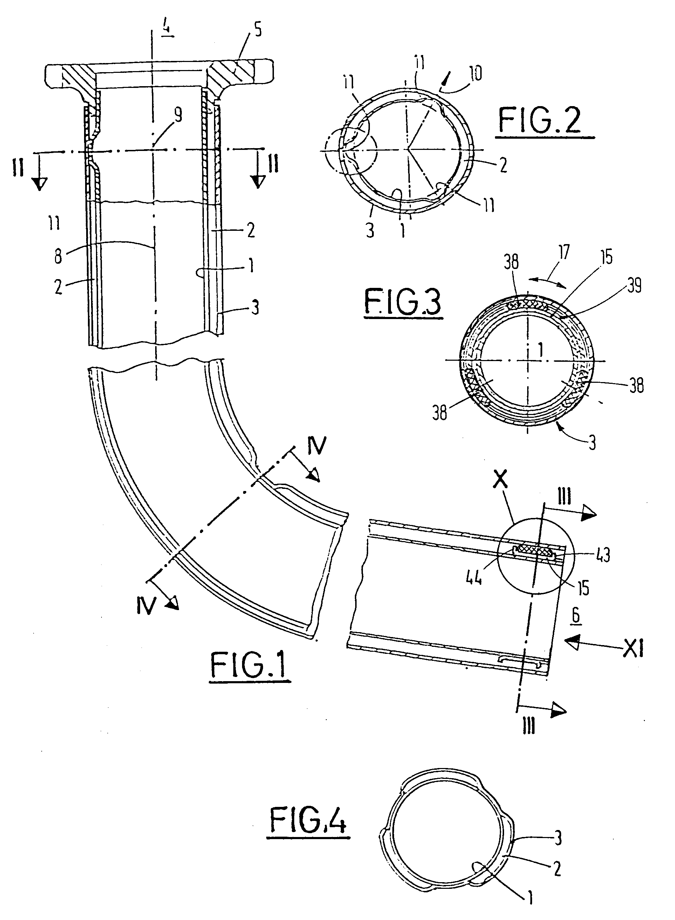

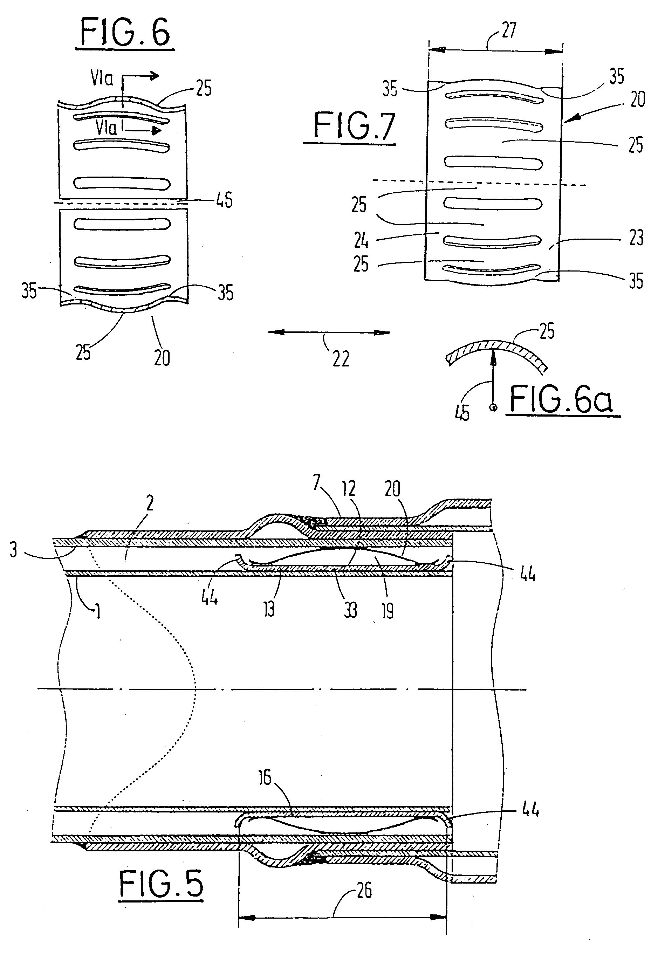

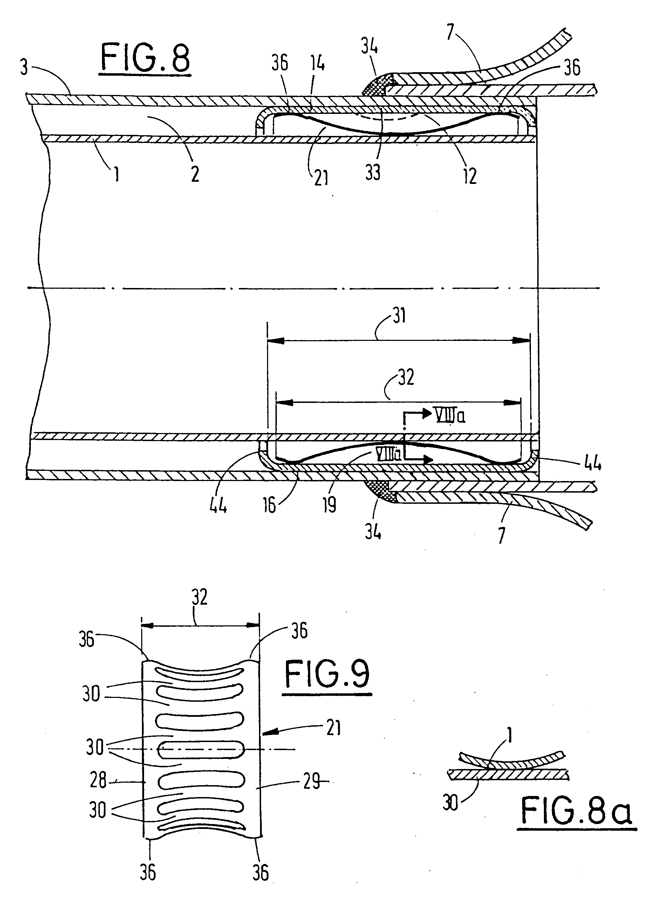

Der Gegenstand der Erfindung wird anhand von in den Figuren dargestellten Ausführungsbeispielen näher erläutert. Es zeigen:
- Fig. 1: einen schematischen Längsschnitt durch die wesentlichen Teile des Vorrohres,
- Fig. 2: einen Schnitt entsprechend der Linie II-II in Fig. 1 durch das Vorrohr im motorseitigen Schiebesitzbereich,
- Fig. 3: einen Querschnitt entsprechend der Linie III-III in Fig. 1 durch den katalysatorseitigen Schiebesitz mit einer Ausführungsform der Distanzelemente,
- Fig. 4: einen Querschnitt entsprechend der Linie IV-IV in Fig. 1 durch das Vorrohr in einem Mittelbereich zwischen den beiden Enden, wo das Innenrohr mit dem Mantelrohr fest verbunden, z.B. verschweißt ist,
- Fig. 5: einen Längsschnitt durch das katalysatorseitige Ende des Vorrohres, wo die Distanzelemente des Schiebesitzes durch einen am Mantelrohr anliegenden Federring gebildet sind,
- Fig. 6: eine schematisierte Schnittdarstellung analog Fig. 5 lediglich des Federringes,
- Fig. 6a: einen Querschnitt entsprechend der Schnittlinie VIa-VIa in Fig. 6,
- Fig. 7: eine Gesamt-Seitenansicht des Federringes,
- Fig. 8: eine funktionsmäßig der Ausführungsform von Fig. 5 ähnliche Ausführungsform, bei der aber das Federelement mit seinen Brückenstegen auf den Außenmantel des Innenrohrs wirkt,
- Fig. 8a: einen Querschnitt entsprechend der Schnittlinie VIIIa-VIIIa in Fig. 8 durch einen Brückensteg des Federringes
- Fig. 9: eine Gesamtdarstellung des bei der Ausführungsform nach Fig. 8 verwendeten Federringes,
- Fig. 10: eine vergrößerte Ausschnittdarstellung des Bereiches X in Fig. 1,
- Fig. 11: die Draufsicht auf einen Ausschnitt des katalysatorseitigen Endes des Vorrohres in Blickrichtung XI von Fig. 1 mit einer Darstellung der Schlitzung des Ringkörpers,
Das Vorrohr gemäß Fig. 1 besteht im wesentlichen aus einem dünnwandigen Innenrohr 1 und einem das Innenrohr 1 tragenden und unter Belassung eines Luft-Ringspaltes 2 umgebenden, vergleichsweise dickwandigen Mantelrohr 3. Das Innenrohr 1 besteht aus einem hochwertigen, das Mantelrohr 3 aus einem weniger hochwertigen und damit kostengünstigen Stahl. Im Bereich des Motorendes 4 ist das Mantelrohr 3 mit einem Befestigungsflansch 5 fest verbunden. Das Ende 4 des Innenrohres 1 ist in der Flanschausnehmung geführt. An seinem katalysatorseitigen Ende 6 ist das Mantelrohr 3 in das schematisch angedeutete Katalysatorgehäuse 7 eingeführt und mit diesem umfänglich verschweißt (Fig. 5,8).

Im Bereich beider Enden 4,6 des Vorrohres ist das Innenrohr 1 mit Schiebesitz am Mantelrohr 3 geführt. Eine konstruktive Ausgestaltung der Schiebesitze ist außer in der Längsschnittdarstellung von Fig. 1 besonders deutlich in den Schnittdarstellungen der Fig. 2,3 erkennbar. Wesentlicher Bestandteil dieses Schiebesitzes ist das Vorhandensein von über den Verlauf des Ringspaltes 2 verteilt angeordneten Distanzelementen zwischen Innenrohr 1 und Mantelrohr 3. Diese Distanzelemente schaffen im Schiebesitzbereich eine zusätzliche Winkelbeweglichkeit zwischen Innenrohr 1 und Mantelrohr 3 um einen im Bereich etwa der Rohrachse 8 gedachten Schiebesitz-Mittelpunkt 9.

Gemäß Fig. 1 und 2 sind gleichmäßig über den Umfang verteilt in das Innenrohr 1 in Radialrichtung 10 auf das Mantelrohr 3 vorstehende, sickenartige Ausbeulungen 11 eingeformt. im Falle des dargestellten Ausführungsbeispieles bilden die Ausbeulungen 11 einen in Rohrlängsrichtung 12 wirksamen Linienkontakt zwischen Innenrohr 1 und Mantelrohr 3. Die insgesamt drei gleichmäßig über den Umfang des Innenrohres 1 verteilten Ausbeulungen 11 können indessen auch so ausgestaltet sein, daß sie lediglich einen Punktkontakt zwischen Innenrohr 1 und Mantelrohr 3 bilden.

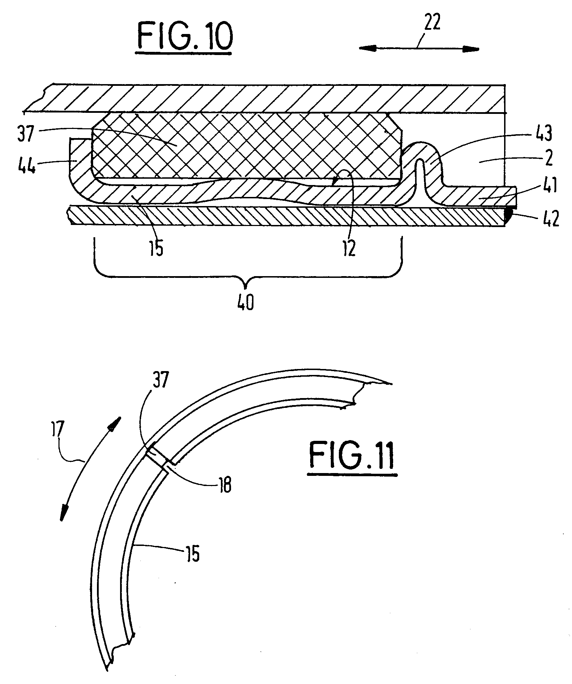

Erfindungsgemäße Ausgestaltungen der Distanzelemente sind Gegenstand insbesondere der Fig. 5 bis 11. Die Distanzelemente - gleichgültig welcher Ausführungsform - liegen an der Konkavseite 12 eines die Querschnittsform etwa einer flachen Rinne aufweisenden Ringkörpers 13-15 an. Mit 13 (Fig. 5) ist ein Innenringkörper bezeichnet, der auf den Außenumfang des Innenrohrs 1 geschweißt ist. Mit 14 ist ein Außenringkörper bezeichnet, der mit der Innenoberfläche des Mantelrohrs 3 verschweißt ist (Fig. 8). Mit 15 ist eine modifizierte Ausführungsform des Innenringkörpers 13 bezeichnet (Fig. 10), die weiter unten im einzelnen noch erläutert wird.

Die Ringkörper 13-15 sind mit dem ihren Konkavseiten 12 abgewandten Bodenmantel 16 an einer dem Luftringspalt 2 begrenzenden Rohrwand befestigt. Es ist dies bei dem Innenringkörper 13 die Außenwand des Innenrohres 1.

Die Ringkörper 13-15 bestehen aus metallischem Werkstoff, insbesondere aus demselben Werkstoff wie das sie tragende Innenrohr 1 oder Mantelrohr 3. Sie weisen die Form eines Zylinders mit an beiden Zylinderenden radial nach innen oder außen abgebogenen Anlageflanschen 44 auf. Die Ringkörper 13-15 sind quer zu ihrer Umfangsrichtung 17 geschlitzt. Ein Ringschlitz 18 ist anhand des Ringkörpers 15 in Fig. 11 dargestellt.

Die Distanzelemente sind durch dem Rinnenboden 12 abgewandte Umfangsbereiche eines in der Ringrinne 19 einliegenden Federringes 20,21 gebildet (Fig. 5 bis 7; 8 und 9).

Bei der Ausführungsform gemäß Fig. 5 bis 7 ist der Innenringkörper 13 mit seinem Bodenmantel 16 am Außenmantel des Innenrohres 1 angeschweißt. Der in seiner Ringrinne 19 einliegende Federring 20 ist eine aus Federstahl bestehende, im wesentlichen zylindrische Manschette mit mehreren über den Manschettenumfang verteilt angeordneten, sich in Axialrichtung 22 zwischen zwei Ringseiten 23,24 erstreckenden, radial nach außen ausgewölbten, nach Art von Federlamellen wirksamen Brückenstegen 25, die an der Innenwand des Mantelrohres 3 anliegen, während er mit seinen Ringseiten 23,24 auf dem Innenringkörper 13 abgestützt ist. Dabei weist der Querschnitt eines Brückensteges 25 die Form etwa eines Kreissegments mit einem Biegeradius 45 auf, der deutlich kleiner ist als der halbe Innendurchmesser des Mantelrohres 3, wobei die Konvexseite des Kreissegments der Innenseite des Mantelrohres 3 zugewandt ist. Dadurch wird das Vorliegen einer einem idealen Punktkontakt am Mantelrohr 3 nahekommenden Konfiguration des Federringes 20 am Mantelrohr 3 hergestellt.

Die außerhalb der Brückenstege 25 liegenden Ringseiten 23,24 des Federringes 20 können ungeschlitzt umfänglich in sich geschlossen sein. Eine andere Ausführungsform sieht vor, daß der Federring 20 durch einen Schlitz 46 geschlitzt ist. Dadurch kann sich der Federring 20 unter dem Einfluß der Erhitzung des Innenrohres 1 umfangsmäßig ungehindert dehnen. Genauso kann der nachstehend beschriebene Federring 21 nach Art des Schlitzes 46 quer zu seiner Umfangsrichtung geschlitzt sein, auch wenn dies in Fig. 9 im einzelnen nicht dargestellt ist.

Die lichte Rinnenbreite 26 (Fig. 5) zwischen den Anlageflanschen 44 des Ringkörpers 13 ist größer als die Breite 27 des Federringes 20.

Bei der Ausführungsform gemäß Fig. 8 ist der Außenringkörper 14 mit seinem Bodenmantel 16 an der Innenseite des Mantelrohres 3 befestigt. Der Federring 21 ist wie der Federring 20 eine aus Federstahl bestehende Manschette mit mehreren über den Manschettenumfang verteilt angeordneten, sich in Axialrichtung 22 zwischen den beiden Ringseiten 28,29 erstreckenden, radial nach innen ausgewölbten Brückenstegen 30, die am Innenrohr 1 anliegen, während er mit seinen Ringseiten 28,29 auf dem Außenringkörper 14 abgestützt ist. Die Gestalt des Federringes 21 ist somit analog der des Federringes 20, nur wirken seine Brückenstege 30 nach innen auf den Umfang des Innenrohres 1, während seine Ringseiten 28,29 radial nach außen gegen die Konkavseite 12 des Außenringkörpers 14 wirksam sind.

Die Ausführungsform des Federringes 21 gemäß Fig. 8 bis 9 hat den Vorteil, daß ohne weitere Vorkehrungen von vornherein die Brückenstege 30 zwischen den beiden Ringseiten 28,29 des Federringes 21 die Querschnittsform etwa eines Rechteckes einnehmen, welches mit seiner Langseite etwa tangential am Außenumfang des Innenrohres 1 anliegt (Fig. 8a). Hierbei wird davon ausgegangen, daß der Federring 21 wie der Federring 20 aus einem durch Stanzung und Biegung mit den Brückenstegen 25 bzw. 30 versehenen und durch Verschweißung seiner Schmalenden zu einem umfänglich in sich geschlossenen Ring geformten Blechstreifen aus Federblech hergestellt sind, wobei sich für die Brückenstege 30 selbsttätig die aus Fig. 8a ersichtliche, etwa rechteckige Querschnittsform ergibt, die eine mittig-tangentiale Anlage am Außenumfang des Innenrohres 1 ermöglicht. Demgegenüber sind bei dem Federring 20 (Fig. 6,7) zusätzliche Vorkehrungen erforderlich, um den Brückenstegen 25 die aus Fig. 6a ersichtliche, gewölbte Querschnittsform zu verleihen, die den für beide Federringformen 20,21 idealen, annähernden Punktkontakt im Bereich der Brückenstege 25 bzw. 30 am Gegenrohrmantel sicherstellt.

Auch die außerhalb der Brückenstege 30 liegenden Ringseiten 28,29 des Federringes 21 sind ungeschlitzt umfänglich in sich geschlossen. Auch beim Außenringkörper 14 ist die lichte Rinnenbreite 31 größer als die Breite 32 des Federringes 21.

Bei beiden Ringkörpern 13,14 ist die Schweißnaht 33 oder sind die Schweißpunkte gegenüber dem zugeordneten Rohr 1 bzw. 3 etwa mittig angeordnet. Dadurch liegen diese Schweißpunkte mit radialem Abstand von den Brückenstegen 25,30 der Federringe 20,21. Beim Einschweißen der Ringkörper 13,14 erfolgt dadurch kein unmittelbarer Wärmeübergang auf die Federringe 20,21. Bei der Ausführungsform gemäß Fig. 8 mit nach innen wirksamen Brückenstegen 30 des Federringes 21 ist der weitere Vorteil gewahrt, daß die Ring-Schweißnaht 34 zwischen Katalysatorgehäuse 7 und Außenumfang des Mantelrohres 3 ebenfalls keine unmittelbare Wärmeeinwirkung auf den Federring 21 hat. Der Federring 21 ist mit seinen besonders sensiblen Brückenstegen 30 gegenüber unmittelbaren Wärmeeinwirkungen seitens der Schweißverbindungen wirksam geschützt.

Die Anlageoberflächen 35 der Ringseiten 23,24 des Federringes 20 bzw. die Anlageoberflächen 36 der Ringseiten 28,29 des Federringes 21 weisen eine in Richtung auf die anliegende Rinnenoberfläche des jeweiligen Ringkörpers 13 bzw. 14 konvex ausgewölbte Querschnittsform auf (Fig. 5 bis 7;8). Diese Formgestaltung hat auch die Aufgabe, eine möglichst ideale, geringflächige Kontaktsituation zum Ringkörper herzustellen, nämlich im wesentlichen wenigstens einen Linienkontakt.

Bei der Ausführungsform gemäß Fig. 10 sind die Distanzelemente durch Umfangsbereiche eines in der Ringrinne 19 einliegenden Drahtpreßringes 37 gebildet. Er besteht praktisch aus Stahlwolle. Im Falle des Ausführungsbeispiels von Fig. 3 sind die Distanzelemente Pufferkörper 38 von elastisch nachgiebiger Konsistenz, beispielsweise aus Stahlwolle (Fig. 3). Die Pufferkörper 38 sind in Umfangsrichtung 17 durch Ringsegmente 39 voneinander distanziert.

Bei der Ausführungsform gemäß Fig. 10 trägt der Ringkörper 15 einen außerhalb seines rinnenförmigen Querschnittsbereiches 40 liegenden, in Axialrichtung 22 abstehenden Ringansatz 41. Dieser Ringansatz 41 ist mit der Außenwand des Innenrohres 1 verschweißt. Die Schweißverbindung ist mit 42 bezeichnet. Der Ringkörper 15 ist dabei einstückig aus einem Blech geformt. Die den Ringansatz 41 tragende Rinnenseitenwand ist durch eine Ringsicke 43 gebildet.

Die Ausführungsform gemäß Fig. 8 bis 9 mit auf das Innenrohr 1 wirkenden Brückenstegen 30 des Federringes 21 hat den weiteren Vorteil, daß das aus dem wertvolleren Werkstoff bestehende Innenrohr 1 eine gegenüber dem Mantelrohr 3 katalysatorseitig kürzere enge aufweisen kann. Bei der Ausführungsform gemäß Fig. 10 ist natürlich eine analoge Umgestaltung des Ringkörpers 15 derart denkbar, daß er nach Art von Fig. 8 mit der Innenseite des Mantelrohres 3 verschweißt ist und daß seine Konkavseite 12 dem Innenrohr 1 zugewandt ist. Dann würde der Drahtpreßring 37 nicht das Mantelrohr 3, sondern das Innenrohr 1 beaufschlagen.

## Patentansprüche

1. Luftspaltisoliertes Vorrohr, das den Abgasstrang zwischen Motor- und Katalysator eines Automobiles bildet
a) mit einem Innenrohr (1),
b) mit einem das Innenrohr (1) tragenden und unter Belassung eines Luft-Ringspaltes (2) umgebenden Mantelrohr (3) und
c) mit einem Schiebesitz zur Führung des Innenrohrs (1) am Mantelrohr (3), durch
- über den Umfang des Luft-Ringspaltes (2) verteilt angeordnete,
- das Innenrohr (1) vom Mantelrohr (3) beabstandende und
- unter einem radialen Vorspanndruck, insbesondere einem radialen Federdruck stehende Distanzelemente
dadurch gekennzeichnet,
daß die Distanzelemente in der Konkavseite eines die Querschnittsform etwa einer flachen Rinne aufweisenden und zu den Rohren (1,3) konzentrischen, gesonderten Ringkörpers (13-15) einliegen,
- der mit seiner Konvexseite an einer den Luft-Ringspalt (2) begrenzenden Rohrwand fixiert ist.

2. Vorrohr nach Anspruch 1,
dadurch gekennzeichnet,
daß der Ringkörper (13-15) aus metallischem Werkstoff, insbesondere aus demselben Werkstoff wie das ihn tragende Rohr (1,3) besteht und die Form eines Zylinders mit an beiden Zylinderenden in radialer Richtung von dem ihn tragenden Rohr (1,3) weggebogenen Anlageflanschen (44) aufweist.

3. Vorrohr nach Anspruch 1 oder 2,
dadurch gekennzeichnet,
daß der Ringkörper (13-15) quer zu seiner Umfangsrichtung (17) geschlitzt ist.

4. Vorrohr nach einem oder mehreren der vorhergehenden Ansprüche,
dadurch gekennzeichnet,
daß der Ringkörper (13-15) mit der Rohrwand des ihn tragenden Rohres (1,3) verschweißt ist.

5. Vorrohr nach einem der Ansprüche 1 bis 4,
dadurch gekennzeichnet,
daß die Distanzelemente durch dem Rinnenboden abgewandte Umfangsbereiche eines in der Ringrinne (19) einliegenden Federringes (20,21) gebildet sind.

6. Vorrohr nach Anspruch 5,
dadurch gekennzeichnet,
daß der Ringkörper (13) am Innenrohr (1) angeordnet ist und daß der in seiner Ringrinne (19) einliegende Federring (20) eine aus Federstahl bestehende Manschette mit mehreren über den Manschettenumfang verteilt angeordneten, sich in Axialrichtung (22) zwischen zwei Ringseiten (23,24) erstreckenden, radial nach außen ausgewölbten Brückenstegen (25) ist, die am Mantelrohr (3) anliegen, während er mit seinen Ringseiten (23,24) am Ringkörper (13) abgestützt ist.

7. Vorrohr nach Anspruch 6,
dadurch gekennzeichnet,
daß mindestens ein Brückensteg (25) die Form etwa eines Kreissegments mit einem Biegeradius (45) aufweist, der kleiner ist als der halbe Innendurchmesser, nämlich der Biegeradius des Mantelrohres (3), und daß der Brückensteg (25) mit der Konvexseite seiner Querschnittsform am Mantelrohr (3) anliegt.

8. Vorrohr nach einem der Ansprüche 5 bis 7,
dadurch gekennzeichnet, daß die außerhalb der Brückenstege (25) liegenden Ringseiten (23,24) des Federringes (20) ungeschlitzt umfänglich in sich geschlossen sind.

9. Vorrohr nach einem der Ansprüche 5 bis 8,
dadurch gekennzeichnet,
daß die lichte Rinnenbreite (26) des Ringkörpers (13) größer ist als die Breite (27) des Federringes (20).

10. Vorrohr nach Anspruch 5,
dadurch gekennzeichnet,
daß der Ringkörper (14) am Mantelrohr (3) angeordnet ist und daß der in seiner Ringrinne (19) einliegende Federring (21) eine aus Federstahl bestehende Manschette mit mehreren über den Manschettenumfang verteilt angeordneten, sich in Axialrichtung (22) zwischen zwei Ringseiten (28,29) erstreckenden, radial nach innen ausgewölbten Brückenstegen (30) ist, die am Innenrohr (1) anlegen, während er mit seinen Ringseiten (28,29) am Ringkörper (14) abgestützt ist.

11. Vorrohr nach einem der Ansprüche 5 bis 10,
dadurch gekennzeichnet,
daß die Federringe (20,21) quer zu ihrer Umfangsrichtung geschlitzt sind.

12. Vorrohr nach Anspruch 10 oder 11,
dadurch gekennzeichnet,
daß die lichte Rinnenbreite (31) des Ringkörpers (14) größer ist als die Breite (32) des Federringes (21).

13. Vorrohr nach einem oder mehreren der Ansprüche 4 bis 12,
dadurch gekennzeichnet,
daß die Schweißnaht (33) oder die Schweißpunkte zwischen Ringkörper (13,14) und zugeordneter Rohrwand etwa mittig zwischen den Anlageflanschen (44) liegen.

14. Vorrohr nach einem oder mehreren der Ansprüche 5 bis 13,
gekennzeichnet durch eine in Richtung auf die anliegende Rinnenoberfläche des Ringkörpers (13,14) konvex ausgewölbte Querschnittsform der Anlageseiten (35,36) der Ringseiten (23,24:28,29) des Federringes (20,21).

15. Vorrohr nach einem der Ansprüche 1 bis 5,
dadurch gekennzeichnet,
daß die Distanzelemente durch Umfangsbereiche eines in der Ringrinne (19) einliegenden Drahtpreßringes (37) gebildet sind.

16. Vorrohr nach einem der Ansprüche 1 bis 4,
dadurch gekennzeichnet,
daß die Distanzelemente Pufferkörper (38) von elastisch nachgiebiger Konsistenz, beispielsweise aus Stahlwolle, sind.

17. Vorrohr nach Anspruch 4,
dadurch gekennzeichnet,
daß der Ringkörper (15) einen außerhalb seines rinnenförmigen Querschnittsbereiches (40) liegenden, in Axialrichtung (22) abstehenden Ringansatz (41) trägt und daß dieser mit einer Rohrwand verschweißt ist, z.B. durch Schweißnaht (42).

18. Vorrohr nach Anspruch 17,
dadurch gekennzeichnet,
daß der Ringkörper (15) einstückig aus einem Blech geformt ist, wobei der den Ringansatz (41) tragende Anlageflansch (44) durch eine Ringsicke (43) gebildet ist.

19. Vorrohr nach einem oder mehreren der vorhergehenden Ansprüche,
dadurch gekennzeichnet,
daß der Schiebesitz an seinem katalysatorseitigen Ende (6) angeordnet ist und daß dort das Katalysatorgehäuse (7) mit dem Außenumfang seines Mantelrohres (3) verschweißt ist.

20. Vorrohr nach einem oder mehreren der vorhergehenden Ansprüche,
dadurch gekennzeichnet,
daß das Innenrohr (1) zwischen den beiden Rohrenden (4,6) am Mantelrohr (3) befestigt ist und an beiden Enden mit einem Schiebesitz am Mantelrohr (3) geführt ist.

## Claims

1. An air-gap insulated exhaust pipe which forms the exhaust gas line between the engine and catalyser of a motor vehicle,
a) with an inner pipe (1),
b) with an outer pipe (3) supporting and surrounding the inner pipe (1), while leaving an annular air gap (2) and
c) with a sliding seat for leading the inner pipe (1) on the outer pipe (3),
through
- spacer elements distributed over the circumference of the annular air gap (2),
- interspacing the inner pipe (1) from the outer pipe (3) and
- being subjected to a radial prestressing pressure, in particular to a radial spring pressure,
characterized in that
the spacer elements are inserted in the concave side of a separate annular body (13 - 15) having the approximate cross-sectional shape of a flat channel and being concentric with the pipes (1, 3),
- which is fixed with its convex side on the pipe wall delimiting the annular air gap (2).

2. An exhaust pipe according to claim 1,
characterized in that
the annular body (13 - 15) consists of a metallic material, in particular of the same material as the pipe (1, 3) supporting it and has the shape of a cylinder with bearing flanges (44) bent off at both cylinder ends in a radial direction from the pipe (1, 3) supporting it.

3. An exhaust pipe according to claim 1 or 2,
characterized in that
the annular body (13 - 15) is slotted transversely to its circumferential direction (17).

4. An exhaust pipe according to one or more of the preceding claims,
characterized in that
the annular body (13 - 15) is welded to the tubular wall of the pipe (1, 3) carrying it.

5. An exhaust pipe according to one of claims 1 to 4,
characterized in that
the spacer elements are formed by the peripheral zones, remote from the channel floor, of a spring ring (20, 21) inserted into the annular channel (19).

6. An exhaust pipe according to claim 5,
characterized in that
the annular body (13) is arranged on the inner pipe (1) and that the spring ring (20) inserted in its annular channel (19) is a sleeve consisting of spring steel, with several lands (25) distributed over the circumference of the sleeve, extending in the axial direction (22) between two ring sides (23, 24) and curving radially outwards which bear on the outer pipe (3), while it is supported with its ring sides (23, 24) on the annular body (13).

7. An exhaust pipe according to claim 6,
characterized in that
at least one land (25) has the approximate shape of a circular segment with a radius of curvature (45) which is smaller than half the internal diameter, that is to say, the radius of curvature of the outer pipe (3), and that the land (25) bears with the convex side of its cross-sectional shape on the outer pipe (3).

8. An exhaust pipe according to one of claims 5 to 7,
characterized in that
the ring sides (23, 24) of the spring ring (20) lying outside the lands (25) are peripherally closed in themselves without slots.

9. An exhaust pipe according to one of claims 5 to 8,
characterized in that
the clear channel width (26) of the annular body (13) is greater than the width (27) of the spring ring (20).

10. An exhaust pipe according to claim 5,
characterized in that
the annular body (14) is arranged on the outer pipe (3) and that the spring ring (21) inserted in its annular channel (19) is a sleeve consisting of spring steel, with several lands (30) distributed over the circumference of the sleeve extending in the axial direction (22) between two ring sides (28, 29) and curving radially inwards which bear on the inner pipe (1), while it is supported with its ring sides (28, 29) on the annular body (14).

11. An exhaust pipe according to one of claims 5 to 10,
characterized in that
the spring rings (20, 21) are slotted transversely to their circumferential direction.

12. An exhaust pipe according to claim 10 or 11,
characterized in that
the clear channel width (31) of the annular body (14) is greater than the width (32) of the spring ring (21).

13. An exhaust pipe according to one or more of claims 4 to 12,
characterized in that
the weld seam (33) or the spot welds between the annular body (13, 14) and the associated tubular wall lie approximately between the bearing flanges (44).

14. An exhaust pipe according to one or more of claims 5 to 13,
characterized by
a cross-sectional shape of the bearing sides (35, 36) of the ring sides (23, 24; 28, 29) of the spring ring (20, 21), which has a convex curvature in the direction towards the bearing channel surface of the annular body (13, 14).

15. An exhaust pipe according to one of claims 1 to 5,
characterized in that
the spacer elements are formed by the peripheral zones of a wire pressure ring (37) inserted in the annular channel (19).

16. An exhaust pipe according to one of claims 1 to 4,
characterized in that
the spacer elements are buffer bodies (38) of a flexible consistency made, for example, of steel wool.

17. An exhaust pipe according to claim 4,
characterized in that
the annular body (15) carries an annular projection (41) lying outside its channel-shaped cross-sectional zone (40) and projecting in the axial direction (22), and that this projection is welded to a pipe wall, for example, by the weld seam (42).

18. An exhaust pipe according to claim 17,
characterized in that
the annular body (15) is integrally formed from a metal sheet, in which arrangement the bearing flange (44) carrying the ring projection (41) is formed by an annular corrugation (43).

19. An exhaust pipe according to one or more of the preceding claims,
characterized in that
the sliding seat is arranged at its end (6) on the catalyser side, and that the catalyser casing (7) is there welded to the outer circumference of its outer pipe (3).

20. An exhaust pipe according to one or more of the preceding claims,
characterized in that
the inner pipe (1) is fixed to the outer pipe (3) between the two pipe ends (4, 6) and is carried at both ends on the outer pipe (3) with a sliding seat.

## Revendications

1. Conduit d'échappement isolé par une couche d'air, qui forme le passage pour les gaz d'échappement entre le moteur et le catalyseur d'une automobile, comprenant :
a) un tube intérieur (1),
b) un tube enveloppe (3) qui porte le tube intérieur (1) et l'entoure en laissant une couche d'air annulaire (2), et
c) un palier de coulissement pour guider le tube intérieur (1) sur le tube enveloppe (3), au moyen d'éléments d'écartement,
- agencés de façon répartie sur la périphérie de la couche d'air annulaire (2),
- maintenant le tube intérieur (1) à distance du tube enveloppe (3), et
- mis sous une pression de précontrainte radiale, en particulier la pression radiale d'un ressort,
caractérisé en ce que les éléments d'écartement reposent dans le côté concave d'un corps annulaire (13-15) spécial, qui présente approximativement la forme de section transversale d'une gouttière plane et qui est concentrique aux tubes (1, 3), ledit corps étant fixé par son côté convexe contre une paroi tubulaire qui limite la couche d'air annulaire (2).

2. Conduit d'échappement selon la revendication 1, caractérisé en ce que le corps annulaire (13-15) est constitué en un matériau métallique, en particulier du même matériau que le tube (1, 3) qui le porte, et présente la forme d'un cylindre avec des brides d'appui (44) aux deux extrémités du cylindre, recourbées en direction radiale en éloignement du tube (1, 3) qui le porte.

3. Conduit d'échappement selon l'une ou l'autre des revendications 1 et 2, caractérisé en ce que le corps annulaire (13-15) est fendu transversalement à la direction de sa périphérie (17).

4. Conduit d'échappement selon l'une ou plusieurs des revendications précédentes, caractérisé en ce que le corps annulaire (13-15) est soudé à la paroi du tube (1, 3) qui le porte.

5. Conduit d'échappement selon l'une des revendications 1 à 4, caractérisé en ce que les éléments d'écartement sont formés par des régions périphériques, détournées du fond de gouttière, d'une bague de ressort (20, 21) qui repose dans la gouttière annulaire (19).

6. Conduit d'échappement selon la revendication 5, caractérisé en ce que le corps annulaire (13) est agencé contre le tube intérieur (1), et en ce que la bague de ressort (20) qui repose dans sa gouttière annulaire (19) est une manchette réalisée en acier ressort avec plusieurs barrettes de jonction (25) bombées radialement vers l'extérieur, agencées de façon répartie sur la périphérie de la manchette et s'étendant en direction axiale (22) entre deux côtés annulaires (23, 24), lesdites barrettes de jonction (25) reposant contre le tube enveloppe (3), tandis que ladite bague de ressort s'appuie par ses côtés annulaires (23, 24) contre le corps annulaire (13).

7. Conduit d'échappement selon la revendication 6, caractérisé en ce qu'une barrette de jonction (25) au moins présente la forme approximative d'un segment de cercle avec un rayon de courbure (45) qui est inférieur à la moitié du diamètre intérieur, à savoir le rayon de courbure du tube enveloppe (3), et en ce que la barrette de jonction (25) repose contre le tube enveloppe (3) par le côté convexe de sa section transversale.

8. Conduit d'échappement selon l'une quelconque des revendications 5 à 7, caractérisé en ce que les côtés annulaires (23, 24) de la bague de ressort (20), situés à l'extérieur des barrettes de jonction (25), sont refermés sur eux-mêmes dans le sens périphérique sans être fendus.

9. Conduit d'échappement selon l'une quelconque des revendications 5 à 8, caractérisé en ce que la largeur libre de la gouttière (26) du corps annulaire (13) est supérieure à la largeur (27) de la bague de ressort (20).

10. Conduit d'échappement selon la revendication 5, caractérisé en ce que le corps annulaire (14) est agencé sur le tube enveloppe (3), et en ce que la bague de ressort (21) qui repose dans sa gouttière annulaire (19) est une manchette réalisée en un acier ressort avec plusieurs barrettes de jonction (30) bombées radialement vers l'intérieur, agencées de façon répartie sur la périphérie de la manchette et s'étendant en direction axiale (22) entre deux côtés annulaires (28, 29), lesdites barrettes reposant contre le tube intérieur (1), tandis que la bague de ressort s'appuie contre le corps annulaire (14) par ses côtés annulaires (28, 29).

11. Conduit d'échappement selon l'une quelconque des revendications 5 à 10, caractérisé en ce que les bagues de ressort (20, 21) sont fendues transversalement à la direction de leur périphérie.

12. Conduit d'échappement selon l'une ou l'autre des revendications 10 et 12, caractérisé en ce que la largeur libre de la gouttière (31) du corps annulaire (14) est supérieure à la largeur (32) de la bague de ressort (21).

13. Conduit d'échappement selon l'une ou plusieurs des revendications 4 à 12, caractérisé en ce que le cordon de soudure (33), ou les points de soudure, entre le corps annulaire (13, 14) et la paroi associée du tube est situé à peu près au milieu entre les brides d'appui (44).

14. Conduit d'échappement selon l'une ou plusieurs des revendications 5 à 13, caractérisé en ce que les faces d'appui (35, 36) des côtés annulaires (23, 24 ; 28, 29) de la bague de ressort (20, 21) ont en section transversale une forme bombée de manière convexe en direction des faces en contact de la gouttière du corps annulaire (13, 14).

15. Conduit d'échappement selon l'une quelconque des revendications 1 à 5, caractérisé en ce que les éléments d'écartement sont formés par des régions périphériques d'une bague comprimée en fil (37) située dans la gouttière annulaire (19).

16. Conduit d'échappement selon l'une quelconque des revendications 1 à 4 caractérisé en ce que les éléments d'écartement sont des corps tampons (38) de consistance élastique souple, par exemple en laine d'acier.

17. Conduit d'échappement selon la revendication 4, caractérisé en ce que le corps annulaire (15) porte un talon annulaire (41) situé à l'extérieur de la région (40) en forme de gouttière de sa section transversale, et dépassant en direction axiale (22), et en ce que ledit talon est soudé à l'une des parois de tube, par exemple par un cordon de soudure (42).

18. Conduit d'échappement selon la revendication 17, caractérisé en ce que le corps annulaire (15) est formé d'une seule pièce à partir d'une tôle, et la bride d'appui (44) qui porte le talon annulaire (41) est formée par une moulure annulaire (43).

19. Conduit d'échappement selon l'une ou plusieurs des revendications précédentes, caractérisé en ce que le palier de coulissement est agencé à l'extrémité (6) du tube côté catalyseur, et en ce que le boîtier de catalyseur (7) est soudé à cet endroit à la périphérie extérieure de son tube enveloppe (3).

20. Conduit d'échappement selon l'une ou plusieurs des revendications précédentes, caractérisé en ce que le tube intérieur (1) est fixé sur le tube enveloppe (3) entre les deux extrémités (4, 6) des tubes, et en ce qu'il est guidé aux deux extrémités au moyen d'un palier de coulissement sur le tube enveloppe (3).
